(19) **Europäisches Patentamt**
**European Patent Office**
**Office européen des brevets**

(11) Publication number: **0 542 353 B1**

(12) **EUROPEAN PATENT SPECIFICATION**

(45) Date of publication of patent specification: **06.09.95**

(51) Int. Cl.⁶: **A21D 6/00**, A21D 2/18

(21) Application number: **92203417.8**

(22) Date of filing: **09.11.92**

The file contains technical information submitted
after the application was filed and not included in
this specification

(54) **Improved, deep-frozen, pre-proofed doughs - II.**

(30) Priority: **14.11.91 EP 91202955**

(43) Date of publication of application:
**19.05.93 Bulletin 93/20**

(45) Publication of the grant of the patent:
**06.09.95 Bulletin 95/36**

(84) Designated Contracting States:
**AT BE CH DE DK ES FR GB GR IE IT LI NL PT
SE**

(56) References cited:
**EP-A- 0 115 108        EP-A- 0 396 162
WO-A-91/15517        US-A- 3 544 335
US-A- 3 987 211        US-A- 4 450 177**

**JOURNAL OF FOOD SCIENCE. vol. 49, no. 6,
1984, CHICAGO US pages 1405 - 1409 H. K.
LEUNG 'STORAGE STABILITY OF A PUFF
PASTRY DOUGH WITH REDUCED WATER AC-
TIVITY'**

**CEREAL CHEMISTRY. vol. 68, no. 1, February
1991, MINNEAPOLIS US pages 60 - 66 O.
NEYRENEUF ET AL. 'PREPARATION OF FRO-
ZEN FRENCH BREAD DOUGH WITH IM-
PROVED STABILITY'**

(73) Proprietor: **UNILEVER N.V.**
**P.O. Box 760**
**NL-3000 DK Rotterdam (NL)**

(84) Designated Contracting States:
**BE CH DE DK ES FR GR IT LI NL PT SE AT**

(73) Proprietor: **UNILEVER PLC**
**Unilever House**
**Blackfriars**
**P.O. Box 68**
**London EC4P 4BO (GB)**

(84) Designated Contracting States:
**GB IE**

(72) Inventor: **Boode-Boissevain, Karin, Unilever
Res. Vlaardingen
Lab.,
Olivier van Noortlaan 120
NL-3133 AT Vlaardingen (NL)**

(74) Representative: **Hartong, Richard Leroy et al
Unilever N.V. Patent Division
P.O. Box 137
NL-3130 AC Vlaardingen (NL)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

EP 0 542 353 B1

## Description

The preparation of a dough, involving mixing of the components, partial pre-proofing step(s), resting step(s), moulding steps and full-proofing steps, after which the moulded products have to be baked immediately, is a time-consuming process for bakers. Accordingly, many attempts have been made to develop processes and/or doughs that can be carried out or prepared on one particular day, whereupon the dough is frozen, whereafter the baking can be carried out at the moment that suits the baker best. However, these attempts have not been very successful so far because the specific volume and ovenspring of the products that could be prepared were far less than those prepared from the non-frozen doughs.

Although it is known from literature how to apply pectin in bakery products, such as bread doughs (cf. SU 1,440,455; RD 286,042; SU 1,128,888; US 4,503,083; ZA 8100756; NL 7306690; SU 267,539 and SU 1,099,933), this prior art does not disclose the use of pectin in deep-frozen, pre-proofed doughs that can be baked directly from the freezer without thawing being needed.

In fact, the closest prior art in this respect is RD 286,042, which discloses the use of pectin in yeast-leavened baked goods which are frozen after baking.

Reheating of the baked product in a microwave oven leads to products which are less tough and gummy. Thus, again, this RD document does not disclose deep-frozen, pre-proofed doughs containing pectin. Moreover, the importance of the gelling properties of the pectin, generally expressed as SAG value, for our new application is not disclosed in the above-mentioned prior art.

Therefore, it was quite surprising that the use of all natural gelling pectin in deep-frozen, pre-proofed doughs should lead to products with such excellent specific volumes and ovenspring properties. Moreover, it was found that the storage stability of these products was surprisingly good.

Our invention therefore relates to deep-frozen, pre-proofed doughs, in particular lean doughs having less than 10 wt.%, based on the flour, of fat, which comprise the conventional dough-forming ingredients, i.e. at least flour, water and yeast, characterized by the presence of 0.5-10 wt.%, based on the flour, of a gelling pectin in the dough. The preferred amount of gelling pectin is 1.5-7.5 wt.%. A gelling pectin is defined here as a pectin having a SAG value of more than 100, in particular 150-350. These pectins are commercially available. Examples thereof are LM-420 ex Unipectina; Blue band and Green band ex Obipectin; MRS-150 and SS-150 ex Pomosin, B and X ex Kopenhagen Pektin and, recently, Slendid ex Hercules Inc.

The specific volume and the ovenspring of products, in particular buns, which are obtained after baking of deep-frozen, moulded pieces of pre-proofed dough with the composition of the invention, exhibit about the same behaviour as that of our doughs containing a gelatin-related compound, as disclosed in our co-pending EP patent application 90203515.3.

The deep-frozen, pre-proofed, moulded dough products can be baked directly in an oven without thawing and/or further proofing. This means that the time-consuming process of the past for making and baking the end products can be avoided now, while the results are approximately the same as in the case of non-frozen doughs.

The doughs according to the invention can also be shaped as a laminated dough wherein the different dough layers are separated by fat layers.

Any type of gelling pectin can be used in our invention. However, the SAG value of the pectins is important. Pectins having SAG values of more than 100 give satisfactory results; SAG values of 150-350, however, are preferred.

In fact, deep-frozen, pre-proofed doughs are aimed at which, in addition to the conventional dough-forming ingredients, also contain 0.5-10 wt.% of gelling pectin based on flour so that, after baking, a moulded piece of dough gives a baked product with an ovenspring of at least 2.0, preferably 3.0-5.0 ml/g.

Another aim is to provide a deep-frozen, pre-proofed dough that imparts a specific volume of at least 4.2 ml/g to a baked product after the baking of a moulded piece of dough.

In addition to the gelling pectin, the doughs can also contain one or more ingredients chosen from the group consisting of ascorbic acid, vital gluten, xylanase, amylase and DATA esters. In particular, the combination of gelling pectin and xylanase and/or amylase leads to unexpectedly good results. In fact, some synergism occurs when gelling pectin is used in combination with xylanase.

The amounts of these extra additives vary from 0.02-0.8 wt.% for xylanase and/or amylase and/or DATA esters to 1-5 wt.% for the vital gluten, while ascorbic acid is used in amounts of 0.005-0.03 wt.%.

Deep-frozen, pre-proofed doughs that are particularly preferred contain 3-7 wt.% of gelling pectin, 3-5 wt.% of vital gluten, 0.03-0.06 wt.% of xylanase and/or amylase and 0.3-0.7 wt.% of DATA esters.

The baked products obtained after baking of the moulded pieces of dough with the composition according to the invention are also part of the invention however, containing a gelling pectin with a SAG-value of at least 100, in particular 150-350. These products comprise in particular buns, Danish pastries, croissants and baguettes.

Another part of the invention is the process for the preparation of the doughs.

In the process, at least one partial pre-proofing for at least 5 minutes is performed. The temperature during this partial pre-proofing should preferably not exceed the temperature of the mixing of the components.

After the partial pre-proofing, resting steps can be carried out but these steps can also be omitted.

In the following step of the process, the dough is proofed completely, preferably below 35°C, for 30-90 minutes. The fully proofed dough is frozen by cooling to -10°C or below, in particular to -10 to -35°C within 0.5-8 hours. The deep-frozen, pre-proofed dough can be stored at temperatures from -5 to -20°C.

The moulding of the dough is usually carried out after at least one partial pre-proofing step has finished. If laminated doughs are prepared, the lamination is preferably carried out with the dough obtained after kneading and one or more resting step(s).

The baking of the moulded, deep-frozen, pre-proofed dough is performed by transferring the moulded dough directly from the freezer to the oven and baking the product at 180-240°C for 15-60 minutes.

The specific volumes of the baked products are measured according to the seed displacement method. Measurements of the baked products were performed on products that were cooled for 60 minutes at ambient temperature.

The ovenspring is calculated as the difference in specific volumes of the products after baking and before baking.

EXAMPLES

The following recipe was used in all the Examples :

|  | Baker % |
|---|---|
| Columbus (Dutch wheat flour) | 100 |
| Salt | 2 |
| Yeast (Koningsgist) | 5 |
| Water | 68-82 |

PECT = gelling pectin (as indicated in Table 1)
GLU = Gluten[1]
XYL = Xylanase[2]

The ingredients were kneaded at a temperature below 27°C. After kneading, pre-proofing was carried out for 15 minutes at 30°C. The pre-proofed dough was moulded in pieces of 50 g. The moulded dough was subjected to a second proofing for 60 minutes at 32°C and 85% RH.

In the direct baking experiments, the pieces of dough were directly baked at 230°C for 18 minutes, using a Probat oven.

In concurrent experiments, the pieces of dough were frozen at -35°C for 60 minutes in a Koma blast-freezer. The frozen pieces were stored for 1 week at -20°C. The stored pieces of dough were baked directly from the freezer at 220°C for 20 minutes in the Probat oven.

S.V. values were measured 60 minutes after cooling of the baked buns, using the seed displacement method.

The results are given in the following Tables :

[1] Protinax, Latenstein

[2] FP 5222, Quest (contains also some $\alpha$-amylase)

# EP 0 542 353 B1

TABLE I

| Comparative Examples | | | | | | |
|---|---|---|---|---|---|---|
| Ex. | PECT-char. | | | | Results | |
| | % PECT | SAG | DE* | PH | SV (fresh) ml/g | SV (frozen) ml/g |
| 1 | 5 | 0 | 54 | 3.4 | 3.1 | 1.9 |
| 2 | 1.5 | 0.51 | 4 | 5.2 | 10.3 | 4.1 |
| 3 | 5.0 | 0 | 40 | - | 3.7 | 2.1 |

\* DE = degree of esterification

TABLE II

| Examples according to the invention | | | | | | | |
|---|---|---|---|---|---|---|---|
| Ex. | % pectin | PECT-char. | | | Other add. | Results | |
| | | SAG | DE* | PH | | SV (fresh) | SV (frozen) |
| | | | | | 0.05% XYL | | |
| 1 | 1.5 | 234 | 73 | 6 | 4% GLU | 11.2 | 5.1 |
| 2 | 5.0 | 234 | 73 | 6 | ibid | 12.1 | 7.7 |
| 3 | 1.5 | 181 | 36 | 6 | ibid | 12.6 | 5.6 |
| 4 | 5.0 | 181 | 36 | 6 | ibid | 13.4 | 6.2 |
| 5 | 3.0 | 125 | 40 | - | ibid | 8.6 | 4.6 |
| 6 | 3.0 | 150 | 63 | 3.4 | ibid | 11.0 | 5.8 |
| 7 | 3.0 | 150 | >50 | - | ibid | 9.7 | 4.9 |
| 8 | 3.0 | 150 | 53 | - | ibid | 9.4 | 5.0 |
| 9 | 3.0 | 150 | >50 | - | ibid | 8.8 | 4.6 |
| 10 | 5.0 | 234 | 73 | 2.9 | ibid | 12.1 | 7.7 |
| 11 | 5.0 | 181 | 36 | 3.9 | ibid | 11.0 | 6.4 |

\* DE = degree of esterification

The following pectins were used :

| Example | Commercial Product |
|---|---|
| 5 | LM-420 (Unipectina) |
| 6 | Green band (Obipektin) |
| 7 | MRS - 150[1] (Pomosin) |
| 8 | Blue band (Obipektin) |
| 9 | SS - 150[1] (Pomosin) |
| 10 | B (Kopenhagen Pektin) |
| 11 | X (Kopenhagen Pektin) |

From the results the following can be concluded :

1. The presence of gelling pectin leads to higher S.V. and ovenspring for the baked, deep-frozen buns.
2. The best results were obtained when pectin was present in combination with at least pure xylanase.

## Claims

1. Deep-frozen, pre-proofed dough comprising the conventional ingredients for forming a dough, including at least flour, water and yeast, characterized by the presence of 0.5-10 wt.%, based on the flour, of gelling pectin in the dough.

4

2. Deep-frozen, pre-proofed dough according to Claim 1, wherein the gelling pectin has a SAG of at least 100, in particular 150-350.

3. Deep-frozen, pre-proofed dough according to Claim 1, wherein the dough is a lean dough with less than 10 wt.%, based on the flour, of fat.

4. Deep-frozen, pre-proofed dough according to Claim 1, wherein the dough is shaped as a laminated dough wherein the different dough layers are separated by fat layers.

5. Deep-frozen, pre-proofed dough according to claims 1-4, comprising the conventional ingredients and 0.5-10 wt% based on flour of gelling pectin, wherein a moulded piece of dough, after baking, gives a baked product with an ovenspring of at least 2.0 ml/g, and an S.V. of at least 4.2 ml/g.

6. Deep-frozen, pre-proofed dough according to Claims 1-5, wherein the dough also contains one or more of the ingredients chosen from the group consisting of ascorbic acid, vital gluten, xylanase, amylase and DATA esters.

7. Deep-frozen, pre-proofed dough according to Claims 1-6, wherein the dough contains 0.02-0.8 wt% xylanase and/or amylase.

8. Baked products, in particular buns, Danish pastries croissants or baguettes, obtained after baking of moulded pieces of dough with the composition of the doughs of Claim 2.

9. Use of gelling pectin in doughs, characterized by the use of gelling pectin in deep frozen, pre-proofed doughs in order to improve the specific volume and/or the ovenspring of products baked from these doughs.

**Patentansprüche**

1. Tiefgefrorener, vorgegärter Teig, umfassend die üblichen Bestandteile zur Herstellung eines Teiges, einschließlich von mindestens Mehl, Wasser und Hefe, gekennzeichnet durch die Gegenwart von 0,5 bis 10 Gew.-% gelierendem Pektin, bezogen auf das Mehl, im Teig.

2. Tiefgefrorener, vorgegärter Teig nach Anspruch 1, bei dem das gelierende Pektin einen SAG-Wert von mindestens 100, insbesondere 150 bis 350, hat.

3. Tiefgefrorener, vorgegärter Teig nach Anspruch 1, bei dem der Teig ein Magerteig mit weniger als 10 Gew.-% Fett, bezogen auf das Mehl, ist.

4. Tiefgefrorener, vorgegärter Teig nach Anspruch 1, bei dem der Teig als laminierter Teig geformt ist, in welchem die verschiedenen Teigschichten durch Fettschichten getrennt sind.

5. Tiefgefrorener, vorgegärter Teig nach einem der Ansprüche 1 bis 4, umfassend die herkömmlichen Bestandteile und 0,5 bis 10 Gew.-% gelierendes Pektin, bezogen auf Mehl, bei dem ein geformtes Stück Teig nach dem Backen ein gebackenes Produkt mit einem Aufgehen im Ofen von mindestens 2,0 ml/g und einem spezifischen Volumen von mindestens 4,2 ml/g ergibt.

6. Tiefgefrorener, vorgegärter Teig nach einem der Ansprüche 1 bis 5, bei dem der Teig auch ein oder mehrere Bestandteile, ausgewählt aus der aus Ascorbinsäure, vitalem Gluten, Xylanase, Amylase und DATA-Estern bestehenden Gruppe, enthält.

7. Tiefgefrorener, vorgegärter Teig nach einem der Ansprüche 1 bis 6, bei dem der Teig 0,02 bis 0,8 Gew.-% Xylanase und/oder Amylase enthält.

8. Backwaren, insbesondere Brötchen, Dänisches Gebäck, Croissants oder Baguettes, erhalten nach Backen geformter Teigstücke mit der Zusammensetzung der Teige nach Anspruch 2.

**9.** Verwendung von gelierendem Pektin in Teigen, gekennzeichnet durch die Verwendung von gelierendem Pektin in tiefgefrorenen, vorgegärten Teigen zum Verbessern des spezifischen Volumens und/oder des Aufgehens im Ofen von aus diesen Teigen gebackenen Produkten.

**Revendications**

**1.** Pâte surgelée pré-fermentée comprenant les ingrédients classiques de formation d'une pâte, notamment la farine, l'eau et une levure, caractérisée par la présence de 0,5 à 10% par rapport au poids de la farine, d'une pectine gélifiante dans la pâte.

**2.** Pâte surgelée, pré-fermentée selon la revendication 1, dans laquelle la pectine gélifiante présente un indice SAG d'au moins 100, en particulier de 150 à 350.

**3.** Pâte surgelée, pré-fermentée selon la revendication 1, dans laquelle la pâte est une pâte maigre contenant moins de 10% par rapport au poids de la farine d'une matière grasse.

**4.** Pâte surgelée, pré-fermentée selon la revendication 1, dans laquelle la pâte est profilée à la façon d'une pâte feuilletée dont les différentes couches de pâte sont séparées par des couches de graisse.

**5.** Pâte surgelée, pré-fermentée selon les revendications 1 à 4, comprenant les ingrédients classiques et 0,5 à 10% par rapport au poids de la farine d'une pectine gélifiante, de sorte qu'une pièce moulée de pâte, après cuisson, donne un produit cuit ayant une expansion au four d'au moins 2,0 ml/g et un V.S d'au moins 4,2 ml/g.

**6.** Pâte surgelée pré-fermentée selon les revendications 1 à 5, la pâte contenant également un ou plusieurs ingrédients choisis parmi l'acide ascorbique, le gluten vital, la xylanase, l'amylase et les esters DATA.

**7.** Pâte surgelée préfermentée selon les revendications 1 à 6, la pâte contenant de 0,02 à 0,8% en poids de xylanase et/ou d'amylase.

**8.** Produits cuits au four, en particulier des petits pains, des pâtisseries danoises, des croissants ou des baguettes qu'on obtient après cuisson au four de pièces moulées de pâte ayant la composition des pâtes de la revendication 2.

**9.** Utilisation d'une pectine gélifiante dans les pâtes, caractérisée en ce qu'on utilise la pectine gélifiante dans des pâtes surgelées et pré-fermentées en vue d'améliorer le volume spécifique et/ou l'expansion au four des produits cuits à partir de ces pâtes.